# EUROPÄISCHE PATENTSCHRIFT

(11) **EP 3 448 933 B1**
(45) Veröffentlichungstag und Bekanntmachung des Hinweises auf die Patenterteilung: **26.02.2020**
(21) Anmeldenummer: 17718942.0
(22) Anmeldetag: 25.04.2017
(51) Int. Cl.: C08L 67/03, C08L 69/00, C08L 55/02, C08K 5/55

(54) **ANTISTATISCHE UND LICHTSTABILE THERMOPLASTISCHE POLYCARBONAT-FORMMASSEN**
ANTISTATIC AND LIGHT STABLE THERMOPLASTIC MOULDING MATERIALS
MASSES DE FORMAGE THERMOPLASTIQUES ANTISTATIQUES ET STABLES A LA LUMIERE

(30) Priorität: 27.04.2016 EP 16167314
(43) Veröffentlichungstag der Anmeldung: 06.03.2019
(73) Patentinhaber: Covestro Deutschland AG, 51373 Leverkusen (DE)
(72) Erfinder: SEIDEL, Andreas, 41542 Dormagen (DE); PUPOVAC, Kristina, 40213 Düsseldorf (DE)
(74) Vertreter: Levpat
(86) Internationale Anmeldenummer: PCT/EP2017/059745
(87) Internationale Veröffentlichungsnummer: WO 2017/186690

(56) Entgegenhaltungen:
- WO-A1-2012/084848
- WO-A1-2013/001168

## Beschreibung

Die vorliegende Erfindung betrifft dauerhaft antistatisch ausgerüstete, lichtstabile und tieftemperaturzähe Formmassen und deren Zusammensetzungen enthaltend mindestens ein Polymer ausgewählt aus der Gruppe bestehend aus aromatischem Polycarbonat, aromatischem Polyestercarbonat und aromatischem Polyester, die Verwendung der Formmassen zur Herstellung von Formkörpern und die Formkörper selbst.

Bei Kunststoffformkörpern ist die auf elektrostatische Aufladung zurückgehende Anlagerung von Staub unter Ausbildung von Staubfiguren ein weit verbreitetes Problem. Besonders störend und die Funktion einschränkend sind Staubablagerungen bei hochglänzenden Formkörpern. Ein weiteres Problem vieler Kunststoffformkörper stellt die Veränderung der Eigenfarbe unter dem Einfluss von Alterungsprozessen dar. Insbesondere neigen viele Kunststoffe beispielsweise zu einer Vergilbung unter Einfluss von (UV)-Licht.

Oft werden die zuvor genannten Probleme durch Aufbringung einer antistatischen und lichtstabilen Beschichtung (beispielsweise durch Lackierung) gelöst. Als Beispiele relevanter Anwendungsbereiche seien Gehäuseanwendungen in der Informationstechnologie sowie dekorative Automobilinnenraumbauteile genannt. Insbesondere im zuletzt genannten Anwendungsbereich ist im Allgemeinen eine hohe Materialduktilität auch bei tiefen Temperaturen eine weitere Bauteilanforderung.

Wenn auf einen nachgeschalteten Beschichtungsprozess verzichtet werden soll, müssen naturgemäß die Formmassen nicht nur die gewünschten mechanischen Eigenschaften, sondern darüber hinaus auch die geforderten Oberflächeneigenschaften (hohe elektrische Ableitfähigkeit bzw. geringer spezifischer elektrischer Oberflächenwiderstand sowie gute Lichtbeständigkeit) aufweisen. Die angestrebte Kombination aus Duktilität auch bei tiefen Temperaturen, hoher elektrischer Ableitfähigkeit und guter Lichtstabilität wird aber von thermoplastischen Zusammensetzungen des Standes der Technik oft nicht ausreichend realisiert.

In den genannten Anwendungsbereichen kommen wegen ihrer vorteilhaften Eigenschaftskombination aus guter Verarbeitbarkeit (hohe Schmelzefließfähigkeit), ausgezeichnete mechanische Eigenschaften, hohe Wärmeformbeständigkeit und Flammwidrigkeit oft Polycarbonat-Zusammensetzungen zum Einsatz. Eine für viele Anwendungsbereiche solcher Polycarbonat-Zusammensetzungen immer noch nur unzureichend gelöste technische Herausforderung stellt jedoch nach wie vor die kombinierte Realisierung eines auch noch bei tiefen Temperaturen duktilen Werkstoffverhaltens, einer guten Alterungsbeständigkeit, insbesondere einer ausreichenden Lichtechtheit, und einer guten Einfärbbarkeit dar, wie sie für viele unbeschichtete Bauteile gefordert wird. Handelsübliche Zusammensetzungen enthaltend Polybutadienkautschuk basierte Schlagzähmodifikatoren wie beispielsweise Polycarbonat/ABS-Blends weisen zwar eine gute Tieftemperaturzähigkeit und Einfärbbarkeit, aber im Allgemeinen eine unzureichende Lichtbeständigkeit auf. Zusammensetzungen enthaltend Acrylatkautschuk basierte Schlagzähmodifikatoren wie beispielsweise Polycarbonat/ASA-Blends dagegen sind zwar lichtbeständig und bei Auswahl geeigneter Schlagzähmodifikatortypen bisweilen auch hinreichend einfärbbar, weisen jedoch eine unzureichende Tieftemperaturduktilität auf. Zusammensetzungen enthaltend Silikonkautschuk- oder Silikon-Acrylat-Kompositkautschuk basierte Schlagzähmodifikatoren wiederum sind zwar ausreichend lichtbeständig und tieftemperaturzäh, weisen aber ein mangelhaftes Einfärbungsverhalten auf. Zudem sind grundsätzlich zwar permanent antistatisch ausgerüstete Polycarbonat-Zusammensetzungen bekannt, der Zusatz der hierfür erforderlichen Additive beeinflusst jedoch in der Regel nachteilig die angestrebten Eigenschaften.

Insofern ist es auch eine unzureichend gelöste technische Herausforderung, Polycarbonat-Zusammensetzungen bereitzustellen, die gleichzeitig ausreichend permanent antistatisch, lichtstabil, tieftemperaturzäh und einfärbbar sind - insbesondere wenn von der Anwendung zudem auch die von kommerziellen Polycarbonat-Zusammensetzungen im Allgemeinen erwartete, oft aber nicht ohne Weiteres zu realisierende gute Verarbeitbarkeit und Verarbeitungsstabilität sowie hohe Wärmeformbeständigkeit gefordert wird.

In der Literatur sind für Thermoplasten Antistatika beschrieben (siehe z.B. Gächter, Müller, Plastic Additives, Hanser Verlag, München, 1996, S. 749 ff), welche die Staubanlagerung reduzieren. Diese Antistatika reduzieren den elektrischen Oberflächenwiderstand der Kunststoffformmassen, wodurch Oberflächenladungen, welche sich bei der Herstellung und beim Gebrauch durch Reibung ausbilden, besser abgeleitet werden. Somit werden Staubpartikel weniger elektrostatisch angezogen.

Polyetheramide, Polyesteramide oder Polyetheresteramide sind häufig beschriebene Antistatika, wobei diese Verbindungen Polymerzusammensetzungen mit einer dauerhaften Antistatikwirkung auszustatten vermögen. Ihre Wirkung beruht auf der Ausbildung eines dreidimensionalen Netzwerkes des Antistatikums in dem mit dem Antistatikum nicht mischbaren Polymer, welches antistatisch ausgerüstet werden soll. Aufgrund der vergleichsweise hohen elektrischen Leitfähigkeit der Polyetheramide, Polyesteramide und Polyetheresteramide resultiert somit eine sofortige und dauerhafte Reduzierung des elektrischen Oberflächen- und Volumenwiderstandes des antistatisch auszurüstenden Polymers, welche bereits bei sehr geringen Luftfeuchtigkeiten einsetzt und von dieser weit weniger abhängt, als das bei den ebenfalls in der Literatur genannten oberflächenaktiven Verbindungen wie Salzen langkettiger Sulfonsäuren der Fall ist.

Permanent antistatisch ausgerüstete Polycarbonat-Zusammensetzungen werden beispielsweise in der US 6,784,257 B2 offenbart. In dieser Anmeldung werden antistatische Polymerzusammensetzungen beschrieben enthaltend ein thermoplastisches Polymer und ein Polyether-Polyamid-Blockcopolymer mit einem Schmelzpunkt zwischen 80 und 150°C, wobei die Polyetherblöcke Ethylenoxid-Einheiten enthalten.

US 6,706,851 B1 offenbart antistatische Polymerzusammensetzungen enthaltend ein thermoplastisches Polymer und ein Polyetheresteramid-Blockcopolymer, wobei die Polyetherblöcke im Wesentlichen aus Ethylenoxid-Einheiten bestehen.

US 6,913,804 B2 offenbart antistatische Polymerzusammensetzungen enthaltend ein thermoplastisches Polymer und eine Mischung aus einem Co-Polymer enthaltend Polyamid- und Polyether-Blöcke, welches keine ionisch-funktionellen Gruppen enthält und einem Co-Polymer enthaltend Polyamid- und Polyether-Blöcke, welches ionisch-funktionelle Gruppen enthält.

Alle drei zuvor genannten Patente offenbaren auch Zusammensetzungen, in denen das thermoplastische Polymer Polycarbonat, ABS oder eine Mischung daraus ist.

CN 101967274 A offenbart permanent antistatische Polycarbonat/Acrylnitril-Butadien-Styrol (PC/ABS)-Zusammensetzungen mit exzellenten mechanischen Eigenschaften und Witterungsstabilität enthaltend Polycarbonat, ein ABS-Harz, antistatische Agenzien, Verträglichkeitsvermittler, Antioxidanzien, Lichtstabilisatoren und andere Additive. Als antistatische Agenzien werden Polyetherester, Polyetheresteramide und Polyetheramide offenbart.

CN 101759974 A offenbart antistatische Polycarbonat-Zusammensetzungen mit geringem Geruch und hoher Zähigkeit für Automobilinnenraumanwendungen enthaltend Polycarbonat, ABS-Harz, welches im Masse-Polymerisations-Verfahren hergestellt wurde und einen Schmelzeindex von 4 bis 25 g/10 min aufweist, ein polymeres antistatisches Agenz, einen Verträglichkeitsvermittler und optional weitere Additive ausgewählt aus beispielsweise der Gruppe enthaltend Farbmittel, Füllstoffe, Stabilisatoren und Gleitmittel. Als antistatische Agenzien werden Polyetheramide offenbart.

JP 3663701 B2 offenbart antistatische Polycarbonat-Zusammensetzungen enthaltend Polycarbonat, kautschukmodifizierten Thermoplast enthaltend Vinylpolymer und Pfropfpolymer erhalten durch Pfropfung von Vinylmonomeren auf kautschukartige Polymere sowie Polyetheramide.

JP 3611228 B2 offenbart antistatische Polycarbonat-Zusammensetzungen enthaltend Polycarbonat, kautschukmodifizierte Vinyl/Cyanovinylcopolymere, Polyetheresteramid-Blockcopolymere und Metallsalz.

WO 2012/084848 A1 offenbart antistatische Polycarbonat-Formmassen mit verbesserter Wärmeformbeständigkeit, Tieftemperaturzähigkeit, Verarbeitungsstabilität, Spannungsrißbeständigkeit und Hydrolysebeständigkeit enthaltend Polycarbonat, kautschukmodifiziertes Vinyl(co)polymerisat, eine Verbindung ausgewählt aus der Gruppe bestehend aus Polyetheramiden, Polyesteramiden und Polyetheresteramiden, eine spezielle Brönstedt-Säure und optional weitere Additive. Borsalz-haltige antistatische Agenzien werden nicht offenbart.

CN 104830043 A offenbart antistatische Polycarbonat/Acrylnitril-Styrol-Acrylat (PC/ASA)-Zusammensetzungen für dekorative Automobilinnenbauteile enthaltend Polycarbonat, ein ASA-Harz, Schlagzähmodifikatoren, Antioxidanzien, Lichtstabilisatoren, Gleitmittel, antistatische Agenzien und Kettenverlängerer, welche sich durch reduzierte Staubanziehungsneigung sowie gut ausbalancierte Steifigkeit und Duktilität auszeichnen und lichtresistent sind.

WO 2013/001168 A1 offenbart ionenleitfähige halogenfreie Polymerblends enthaltend mindestens ein Polyether-basiertes Polymer oder Co-Polymer ausgewählt aus der Gruppe der Polyether-Block-Polymere und Polyether-basierten Polyurethane, dadurch charakterisiert, dass dieses Blend ein Alkalisalz eines borzentrierten anionischen Komplexes enthaltend zweizähnige Liganden ausgewählt aus der Gruppe bestehend aus C2-C8-aliphatischen oder aromatischen Komponenten mit mindestens zwei reaktiven Gruppen ausgewählt aus -COOH und -OH enthält, wobei es sich in bevorzugter Ausführungsform bei dem Bor-haltigen Salz um Kaliumbis(oxalato)borat oder Natriumbis(oxalato)borat handelt. Die Anmeldung offenbart ebenfalls ionenleitfähige Polymerblends enthaltend weiterhin ein polymeres Material ausgewählt aus der Gruppe bestehend aus Polyamiden, Polyestern, Polyacrylaten, Polymethylmethacrylaten sowie Polyester-basierten Polyurethanen. Polycarbonat-basierte Blends werden nicht offenbart.

Es war wünschenswert, permanent antistatische Zusammensetzung enthaltend mindestens einen Vertreter ausgewählt aus der Gruppe bestehend aus aromatischem Polycarbonat, aromatischem Polyestercarbonat und aromatischem Polyester mit einer verbesserten Kombination aus möglichst geringem spezifischen elektrischen Oberflächenwiderstand (ausreichend hoher elektrischer Ableitfähigkeit), ausgezeichneter Farbstabilität unter Heißlichtexposition und Tieftemperaturduktilität bereitzustellen. Die Zusammensetzungen sollten darüber hinaus eine gute Verarbeitbarkeit und Verarbeitungsstabilität sowie hohe Wärmeformbeständigkeit aufweisen. Somit sollten die Zusammensetzungen die Anforderungen der Automobilindustrie für unlackierte dekorative Bauteile im Automobilinnenraum erfüllen. Weiterhin sollten sich die Formmassen gut einfärben lassen und im eingefärbten Zustand die Volkswagen-Spezifikationen gemäß PV3977 an die elektrische Ableitfähigkeit (dieses erfordert der Erfahrung nach einen spezifischen Oberflächenwiderstand von kleiner oder gleich 1·10¹² Ω) sowie gemäß PV1303 an die Heißlichtbeständigkeit erfüllen sowie ein weitgehend duktiles Verhalten bei -30°C sowohl im multiaxialen Durchstoß- als auch im Kerbschlagversuch aufweisen. In der Heißlichtalterung nach PV1303 wurde eine Graumaßstabsbewertung relativ zum Ausgangszustand vor der Belichtung von minimal 4 für eine Expositionsdauer von 3 Belichtungszyklen, bevorzugt auch für eine Expositionsdauer von bis zu 6 Belichtungszyklen angestrebt.

Es wurde nun gefunden, dass Zusammensetzungen enthaltend
A) 50 bis 90 Gew.-%, bevorzugt 60 bis 80 Gew.-%, besonders bevorzugt 65 bis 75 Gew.-% mindestens eines Polymers ausgewählt aus der Gruppe bestehend aus aromatischem Polycarbonat, aromatischem Polyestercarbonat und aromatischen Polyester, bevorzugt aromatisches Polycarbonat,
B) 5 bis 40 Gew.-%, bevorzugt 10 bis 30 Gew.-%, besonders bevorzugt 15 bis 25 Gew.-% Polymer enthaltend
   B.1 mindestens ein kautschukmodifiziertes Vinyl(co)polymerisat enthaltend
      B.1.1 80 bis 95 Gew.-%, bezogen auf B.1, wenigstens eines Vinylmonomeren und
      B.1.2 5 bis 20 Gew.-%, bezogen auf B.1, einer oder mehrerer kautschukelastischer Polybutadien-haltiger Pfropfgrundlagen,
         wobei B.1
         mit den Vinylmonomeren B.1.1 gepfropfte Polybutadien-haltige Kautschukpartikel, die Inklusionen aus Vinyl(co)polymerisat bestehend aus den Vinylmonomeren B.1.1 enthalten,
            und
         eine nicht an diese Kautschukpartikel gebundene und nicht in Kautschukpartikel eingeschlossene Vinyl(co)polymerisat-Matrix bestehend aus den Vinylmonomeren B.1.1
            enthält
   und optional B.2 weitere mit Vinylmonomeren gepfropfte Kautschukpartikel, bevorzugt hergestellt im Emulsions-Polymerisationsverfahren aus
      B.2.1 5 bis 75 Gew.-%, bevorzugt 10 bis 60 Gew.-%, besonders bevorzugt 25 bis 50 Gew.-%, jeweils bezogen auf B.2, wenigstens eines Vinylmonomeren auf
      B.2.2 25 bis 95 Gew.-%, .-%, bevorzugt 40 bis 90 Gew.-%, besonders bevorzugt von 50 bis 75 Gew.-%, jeweils bezogen auf B.2, einer oder mehrerer kautschukelastischer Pfropfgrundlagen,
C) 3 bis 25 Gew.-%, bevorzugt 5 bis 15 Gew.-%, besonders bevorzugt 6 bis 12 einer Mischung enthaltend a) mindestens ein Polyether-basiertes Polymer oder Copolymer ausgewählt aus der Gruppe bestehend aus Polyether-Block-Polymeren und Polyether-basierten Polyurethanen und b) mindestens ein Bor-haltiges Salz,
D) 0 bis 2 Gew.-%, bevorzugt 0,1 bis 1,0 Gew.-%, besonders bevorzugt 0,2 bis 0,8 Gew.-% mindestens eines UV-Stabilisators ausgewählt aus der Gruppe bestehend aus den Substanzklassen der Benzotriazole und Triazine,
E) 0 bis 20 Gew.-%, bevorzugt 0,1 bis 10 Gew.-%, besonders bevorzugt 0,2 bis 5 Gew.-% eines oder mehrerer weiterer Additive,
wobei die Zusammensetzungen enthaltend die Komponenten A) bis E) einen Polybutadiengehalt von 1 bis 5 Gew.-%, bevorzugt von 1,5 bis 4,0 Gew.-%, besonders bevorzugt von 1,7 bis 3,0 Gew.-% aufweisen,
die vorteilhaften Eigenschaften aufweisen.

Im Folgenden werden besondere Ausführungsformen 1 bis 28 der vorliegenden Erfindung genannt.
1. Zusammensetzungen enthaltend
   A) 50 bis 90 Gew.-% mindestens eines Polymers ausgewählt aus der Gruppe bestehend aus aromatischem Polycarbonat, aromatischem Polyestercarbonat und aromatischem Polyester,
   B) 5 bis 40 Gew.-% Polymer enthaltend
      B.1 mindestens ein kautschukmodifiziertes Vinyl(co)polymerisat enthaltend
         B.1.1 80 bis 95 Gew.-%, bezogen auf B.1, wenigstens eines Vinylmonomeren und
         B.1.2 5 bis 20 Gew.-%, bezogen auf B.1, einer oder mehrerer kautschukelastischer Polybutadien-haltiger Pfropfgrundlagen,
            wobei B.1
            mit den Vinylmonomeren B.1.1 gepfropfte Polybutadien-haltige Kautschukpartikel, die Inklusionen aus Vinyl(co)polymerisat bestehend aus den Vinylmonomeren B.1.1 enthalten,
            und
            eine nicht an diese Kautschukpartikel gebundene und nicht in Kautschukpartikel eingeschlossene Vinyl(co)polymerisat-Matrix bestehend aus den Vinylmonomeren B.1.1 enthält
      und optional B.2 weitere mit Vinylmonomeren gepfropfte Kautschukpartikel aus
         B.2.1 5 bis 75 Gew.-%, bezogen auf B.2, wenigstens eines Vinylmonomeren auf
         B.2.2 25 bis 95 Gew.-%, bezogen auf B.2, einer oder mehrerer kautschukelastischer Pfropfgrundlagen,
   C) 3 bis 25 Gew.-% einer Mischung enthaltend a) mindestens ein Polyether-basiertes Polymer oder Copolymer ausgewählt aus der Gruppe bestehend aus Polyether-Block-Polymeren und Polyether-basierten Polyurethanen und b) mindestens ein Bor-haltiges Salz,
   D) 0 bis 2 Gew.-% mindestens eines UV-Stabilisators ausgewählt aus der Gruppe bestehend aus den Substanzklassen der Benzotriazole und Triazine,
   E) 0 bis 20 Gew.-% eines oder mehrerer weiterer Additive,
      wobei die Zusammensetzungen enthaltend die Komponenten A) bis E) einen Polybutadiengehalt von 1 bis 5 Gew.-% aufweisen.
2. Zusammensetzungen gemäß Ausführungsform 1, wobei die Komponente A aromatisches Polycarbonat enthält.
3. Zusammensetzungen gemäß Ausführungsform 1, wobei die Komponente A aromatisches Polycarbonat ist.
4. Zusammensetzungen gemäß einer der vorherigen Ausführungsformen, wobei Komponente B.1 in Masse-Polymerisationsverfahren hergestellt wird und die Vinyl(co)polymerisat-Inklusionen enthaltenden Kautschukpartikel in der Komponente B.1 einen mittleren Partikeldurchmesser D50 von 0,5 bis 1,5 µm aufweisen.
5. Zusammensetzungen gemäß einer der vorherigen Ausführungsformen, wobei die Vinyl(co)polymerisat-Inklusionen enthaltenden Kautschukpartikel in der Komponente B.1 einen mittleren Partikeldurchmesser D50 von 0,7 bis 1,0 µm aufweisen.
6. Zusammensetzungen gemäß einer der vorherigen Ausführungsformen, wobei die Komponente B.1 einen Polybutadiengehalt von 8 bis 13 Gew.-% aufweist.
7. Zusammensetzungen gemäß einer der vorherigen Ausführungsformen, wobei es bei es sich bei der Komponente B.1.2 um reinen Butadienkautschuk handelt.
8. Zusammensetzungen gemäß einer der Ausführungsformen 1 bis 6, wobei es bei es sich bei der Komponente B.1.2 um Styrol-Butadien-Blockcopolymer-Kautschuk handelt.
9. Zusammensetzungen gemäß einer der vorherigen Ausführungsformen, wobei die Komponente B.2 hergestellt ist in Emulsions-Polymerisation durch Pfropfung von
   B.2.1 25 bis 50 Gew.-%, bezogen auf das Pfropfpolymerisat B.2, wenigstens eines Vinylmonomeren auf
   B.2.2 50 bis 75 Gew.-%, bezogen auf das Pfropfpolymerisat B.2, einer oder mehrerer kautschukelastischer Pfropfgrundlagen mit Glasübergangstemperaturen von < -70°C und mit mittleren Teilchengrößen D50 von 0,2 bis 0,4 µm.
10. Zusammensetzungen gemäß einer der vorherigen Ausführungsformen, wobei es bei es sich bei der Komponente B.2.2 um reinen Butadienkautschuk handelt.
11. Zusammensetzungen gemäß einer der Ausführungsformen 1 bis 9, wobei es bei es sich bei der Komponente B.2.2 um Styrol-Butadien-Blockcopolymer-Kautschuk handelt.
12. Zusammensetzungen gemäß einer der Ausführungsformen 1 bis 9, wobei es bei es sich bei der Komponente B.2 um einen MBS-Modifikator mit Kern-Schale Struktur handelt.
13. Zusammensetzungen gemäß einer der vorherigen Ausführungsformen, wobei die Zusammensetzungen frei sind von Polyacrylat- und Silikon-Kautschuken sowie von Pfropfpolymeren, die solche Kautschuke als Pfropfgrundlage enthalten.
14. Zusammensetzungen gemäß einer der vorherigen Ausführungsformen, wobei die Komponente B nicht an die Kautschukgrundlage chemisch gebundenes und nicht in den Kautschukpartikeln eingeschlossenes Vinyl(co)polymerisat bestehend aus den Monomeren gemäß B.1.1 oder B.2.1 in einem Anteil von mindestens 50 Gew.-%, bezogen auf die Komponente B, enthält.
15. Zusammensetzungen gemäß einer der vorherigen Ausführungsformen, wobei die Komponente B nicht an die Kautschukgrundlage chemisch gebundenes und nicht in den Kautschukpartikeln eingeschlossenes Vinyl(co)polymerisat bestehend aus den Monomeren gemäß B.1.1 oder B.2.1 in einem Anteil von mindestens 70 Gew.-%, bezogen auf die Komponente B, enthält.
16. Zusammensetzungen gemäß einer der vorherigen Ausführungsformen, wobei Komponente B zu mindestens 70 Gew.-% aus Komponente B.1 besteht.
17. Zusammensetzungen gemäß einer der vorherigen Ausführungsformen, wobei der nicht an Kautschukpartikel gebundene und nicht in Kautschukpartikel eingeschlossene Vinyl(co)polymerisat Anteil der Komponente B ein gewichtsgemitteltes Molekulargewicht von 140 bis 200 kg/mol aufweist.
18. Zusammensetzungen gemäß einer der vorherigen Ausführungsformen, wobei das Polyether-basierte Polymer aus Komponente C) ein Polyether-Amid-Blockcopolymer bestehend aus 30 bis 70 Gew.-%, bezogen auf das Block-Copolymer, an Polyethylenglykolblöcken und zu 30 bis 70 Gew.-%, bezogen auf das Block-Copolymer, an Polyamid ist.
19. Zusammensetzungen gemäß einer der vorherigen Ausführungsformen, wobei es sich bei dem Bor-haltigen Salz in Komponente C um mindestens ein Alkalisalz eines borzentrierten anionischen Komplexes enthaltend zweizähnige Liganden ausgewählt aus der Gruppe bestehend aus C2-C8-aliphatischen oder aromatischen Komponenten mit mindestens zwei reaktiven Gruppen ausgewählt aus -COOH und -OH handelt.
20. Zusammensetzungen gemäß Ausführungsform 19, wobei es sich bei dem Bor-haltigen Salz um Kaliumbis(oxalato)borat oder Natriumbis(oxalato)borat handelt.
21. Zusammensetzungen gemäß einer der vorherigen Ausführungsformen, wobei Komponente C ein weiteres Polymer ausgewählt aus der Gruppe bestehend aus Poly(meth)acrylaten und Polymethyl(meth)acrylaten enthält.
22. Zusammensetzungen gemäß einer der vorherigen Ausführungsformen, wobei die Komponente C besteht aus
   - 69,6 bis 98,6 Gew.-% Polyether-Block-Polymer bestehend zu 30 bis 70 Gew.-%, bezogen auf das Polyether-Block-Polymer, aus Polyethylenglykolblöcken und zu 70 bis 30 Gew.-%, bezogen auf das Polyether-Block-Polymer, aus Polyamid-12-Blöcken,
   - 1 bis 30 Gew.-% mindestens eines weiteren Polymers ausgewählt aus der Gruppe bestehend aus Poly(meth)acrylaten und Polymethyl(meth)acrylaten und
   - 0,4 bis 4,0 Gew.-% mindestens eines Vertreters ausgewählt aus der Gruppe bestehend aus Kaliumbis(oxalato)borat und Natriumbis(oxalato)borat.
23. Zusammensetzungen gemäß einer der vorherigen Ausführungsformen, wobei die Komponente C einen spezifischen Oberflächenwiderstand von kleiner 1·10⁹ Ω aufweist.
24. Zusammensetzungen gemäß einer der vorherigen Ausführungsformen, wobei die Komponente C einen spezifischen Oberflächenwiderstand von kleiner 1·10⁸ Ω aufweist.
25. Zusammensetzungen gemäß einer der vorherigen Ausführungsformen, wobei die Komponente D ausgewählt ist aus der Gruppe bestehend aus den Substanzklassen der dimeren Benzotriazole und der 1,3,5-Triazine.
26. Zusammensetzungen gemäß einer der vorherigen Ausführungsformen bestehend aus den Komponenten A) bis E).
27. Verwendung von Zusammensetzungen gemäß einer der Ausführungsformen 1 bis 26 zur Herstellung von Formkörpern.
28. Formkörper hergestellt aus Zusammensetzungen gemäß einer der Ausführungsformen 1 bis 26.

### Komponente A

Als Komponente A kann ein aromatisches Polycarbonat, ein aromatisches Polyestercarbonat, ein aromatischer Polyester oder eine Mischung aus mehreren Vertretern einer oder mehrerer dieser Substanzklassen gemäß der Beschreibung zuvor zum Einsatz kommen.

Bevorzugt enthält Komponente A aromatisches Polycarbonat.

Besonders bevorzugt wird als Komponente A ein oder mehrere aromatische Polycarbonate eingesetzt.

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 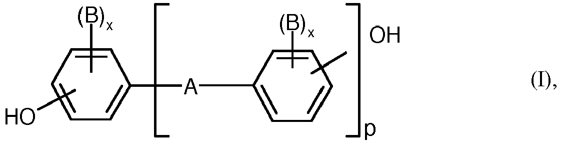 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 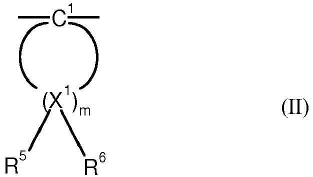 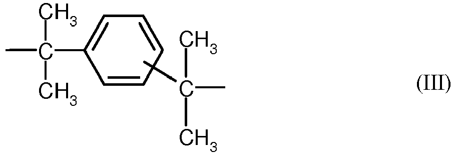
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p 1: oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

In einer bevorzugten Ausführungsform weisen die als Komponente A geeigneten aromatischen Polycarbonate oder Polyestercarbonate ein gewichtsgemitteltes Molekulargewicht M_{w} (ermittelt durch Gelpermeationschromatographie (GPC) in Methylenchlorid mit Polycarbonat als Standard) von 15000 g/mol bis 50000 g/mol, bevorzugt von 22000 g/mol bis 35000 g/mol, insbesondere von 24000 bis 32000 g/mol auf.

In Frage kommende aromatische Polyester sind in bevorzugter Ausführungsform Polyalkylenterephthalate. Es handelt sich hierbei in besonders bevorzugter Ausführungsform um Reaktionsprodukte aus aromatischen Dicarbonsäuren oder ihren reaktionsfähigen Derivate, wie Dimethylester oder Anhydride, und aliphatischen, cycloaliphatischen oder araliphatischen Diolen sowie Mischungen dieser Reaktionsprodukte.

Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten aromatischen Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten aromatischen Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die aromatischen Polyalkylenterephthalate können durch Einbau relativ kleiner Mengen 3-oder 4-wertiger Alkohole oder 3- oder 4-basischer Carbonsäuren, z.B. gemäß DE-A 1 900270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind aromatische Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen von aromatischen Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten aromatischen Polyalkylenterephthalate besitzen eine Viskositätszahl von 0,4 bis 1,5 dl/g, vorzugsweise 0,5 bis 1,2 dl/g, gemessen in Phenol/o-Dichlorbenzol (1:1 Gewichtsteile) in einer Konzentration von 0,05g/ml gemäß ISO 307 bei 25°C im Ubbelohde-Viskosimeter.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente B

Die erfindungsgemäß als Komponente B einsetzbaren, kautschukmodifizierten Vinyl(co)polymerisate enthalten, bevorzugt zu mindestens 70 Gew.-%, besonders bevorzugt zu mindestens 85 Gew.-%, weiter bevorzugt zu mindestens 95 Gew.-%, in am stärksten bevorzugter Ausführungsform 100 Gew.-%, bezogen auf die Komponente B, ein erstes kautschukmodifiziertes Vinyl(co)polymerisat B.1, bevorzugt hergestellt im Masse-Polymerisationsverfahren,
- welches eine disperse Phase aus mit Vinylmonomeren B.1.1 gepfropfte Polybutadien-haltigen Kautschukpartikeln mit Inklusionen aus Vinyl(co)polymerisat bestehend aus den Vinylmonomeren B.1.1 und eine nicht an die Kautschukpartikel gebundene und nicht in die Kautschukpartikel eingeschlossene kautschukfreie Vinyl(co)polymerisat-Matrix bestehend aus den Vinylmonomeren B.1.1 enthält,
- wobei die Vinyl(co)polymerisat-Inklusionen enthaltenden Kautschukpartikel einen mittleren Partikeldurchmesser D50 gemessen per Ultrazentrifugation von 0,3 bis 10,00 µm, bevorzugt von 0,5 bis 1,5 µm, insbesondere von 0,7 bis 1,0 µm aufweisen,
- welches einen Polybutadiengehalt von 5 bis 18 Gew.-%, bevorzugt von 7 bis 15 Gew.-%, insbesondere von 8 bis 13 Gew.-% aufweist und

Die kautschukmodifizierten Vinyl(co)polymerisate gemäß Komponente B.1 weisen eine Schmelzeflussrate (MVR), gemessen gemäß ISO 1133 (Version von 2012) bei 220°C mit einer Stempellast von 10 kg, von bevorzugt 2 bis 15 ml/10min, besonders bevorzugt 3 bis 10 ml/10min, insbesondere 4 bis 8 ml/10min auf.

Derartige kautschukmodifizierte Vinyl(co)polymerisate B.1 werden hergestellt durch Polymerisation von
B.1.1 vorzugsweise 80 bis 95 Gew.-%, besonders bevorzugt 83 bis 93 Gew.-%, weiter bevorzugt 85 bis 92 Gew.-%, bezogen auf das kautschukmodifizierte Vinyl(co)polymerisat B.1, wenigstens eines Vinylmonomeren in Anwesenheit von
B.1.2 vorzugsweise 5 bis 20 Gew.-%, besonders bevorzugt 7 bis 17 Gew.-%, weiter bevorzugt 8 bis 15 Gew.-%, bezogen auf das kautschukmodifizierte Vinyl(co)polymerisat B.1, einer oder mehrerer kautschukelastischer Polybutadien-haltiger Pfropfgrundlagen mit Glasübergangstemperaturen < -50°C, weiter bevorzugt von < -60°C, besonders bevorzugt < -70°C.

Die Glasübergangstemperatur wird, sofern in der vorliegenden Erfindung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Bei der zur Herstellung des kautschukmodifizierten Vinyl(co)polymerisats B.1 bevorzugt angewandten Massepolymerisations-Reaktion erfolgt sowohl die Polymerisation der Vinylmonomeren gemäß B.1.1 als auch eine Pfropfung des so entstehenden Vinyl(co)polymers auf die kautschukelastische Pfropfgrundlage gemäß B.1.2. Des Weiteren erfolgt bei dieser Reaktionsführung durch Selbstorganisation (Phasenseparation) die Ausbildung einer kautschukhaltigen Phase enthaltend ebenso phasenseparierte Inklusionen (Einschlüsse) aus Vinyl(co)polymerisat bestehend aus den Monomeren gemäß B.1.1, wobei diese kautschukhaltige Phase in einer Vinyl(co)polymerisat-Matrix aufgebaut aus den Monomeren gemäß B.1.1 dispergiert vorliegt. Unter den Inklusionen wird verstanden, dass Vinyl(co)polymerisat im Inneren der Kautschukpartikel eingebettet ist. Das Vinyl(co)polymerisat kann dabei chemisch an die kautschukelastische Pfropfgrundlage gebunden sein oder in Form von nicht angebundenen Polymerketten eingeschlossen vorliegen. Das eingeschlossene Vinyl(co)polymerisat lässt sich durch übliche Lösungsmittel wie Aceton nicht herauslösen.

Die Größe der Kautschukpartikel in den so hergestellten kautschukmodifizierten Vinyl(co)polymerisaten B.1 wird über die Bedingungen der Reaktionsführung wie Temperatur und daraus resultierende Viskosität des Polymerisats sowie Scherung durch beispielsweise Rühren eingestellt.

Die mittlere Teilchengröße D50 ist der Durchmesser, oberhalb und unterhalb dessen jeweils 50 Gew.-% der Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-1796) bestimmt.

Die Monomere B.1.1 sind vorzugsweise Gemische aus
B.1.1.1 65 bis 85 Gew.-Teilen, besonders bevorzugt 70 bis 80 Gew.-Teilen, weiter bevorzugt 74 bis 78 Gew.-Teilen, jeweils bezogen auf die Summe aus B.1.1.1 und B.1.1.2, Vinylaromaten und/oder kernsubstituierten Vinylaromaten (wie Styrol, α-Methylstyrol, p-Methylstyrol, p-Chlorstyrol) und/oder (Meth)Acrylsäure-(C1-C8)-Alkylester, wie Methylmethacrylat, Ethylmethacrylat), und
B.1.1.2 15 bis 35 Gew.-Teilen, besonders bevorzugt 20 bis 30 Gew.-Teilen, weiter bevorzugt 22 bis 26 Gew.-Teilen, jeweils bezogen auf die Summe aus B.1.1.1 und B.1.1.2, Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid.

Bevorzugte Monomere B.1.1.1 sind ausgewählt aus mindestens einem der Monomere Styrol, α-Methylstyrol und Methylmethacrylat. Bevorzugte Monomere B.1.1.2 sind ausgewählt aus mindestens einem der Monomere Acrylnitril, Butylacrylat, Maleinsäureanhydrid und Methylmethacrylat. Besonders bevorzugte Monomere sind B.1.1.1 Styrol und B.1.1.2 Acrylnitril. In einer weiteren bevorzugten Ausführungsform ist B.1.1.1 Styrol und B.1.1.2 eine Mischung aus Acrylnitril und Butylacrylat.

Bevorzugte Pfropfgrundlagen B.1.2 sind Dienkautschuke enthaltend Butadien, oder Gemische von Dienkautschuken enthaltend Butadien oder Copolymerisate von Dienkautschuken enthaltend Butadien oder deren Gemische mit weiteren copolymerisierbaren Monomeren (z.B. gemäß B.1.1.1 und B.1.1.2).

Besonders bevorzugt als Pfropfgrundlage B.1.2 ist reiner Polybutadienkautschuk. In einer weiteren bevorzugten Ausführungsform handelt es sich bei B.1.2 um Styrol-Butadien-Blockcopolymer-Kautschuk.

Die kautschukmodifizierten Vinyl(co)polymerisate gemäß Komponente B können bis zu 30 Gew.-%, bevorzugt bis zu 15 Gew.-%, weiter bevorzugt bis zu 5 Gew.-%, bezogen auf die Komponente B, weitere mit Vinylmonomeren gepfropfte Kautschukpartikel (Pfropfpolymerisate) B.2 mit einem kautschukelastischen Kern und einer Vinyl(co)polymerisat-Hülle, bevorzugt im Emulsions-Polymerisationsverfahren hergestellt, enthalten. In besonders bevorzugter Ausführungsform enthält die Komponente B aber kein solches Pfropfpolymerisat B.2.

Erfindungsgemäß derartig als Bestandteil von Komponente B.2 einsetzbare Pfropfpolymerisate mit einem kautschukelastischen Kern und einer Vinyl(co)polymerisat-Hülle sind ein oder mehrere Pfropfpolymerisate hergestellt durch Pfropfung von
B.2.1 5 bis 75 Gew.-%, bevorzugt 10 bis 60 Gew.-%, besonders bevorzugt 25 bis 50 Gew.-%, bezogen auf das Pfropfpolymerisat B.2, wenigstens eines Vinylmonomeren auf
B.2.2 25 bis 95 Gew.-%, bevorzugt 40 bis 90 Gew.-%, besonders bevorzugt von 50 bis 75 Gew.-%, bezogen auf das Pfropfpolymerisat B.2, einer oder mehrerer kautschukelastischer Pfropfgrundlagen.

Die Pfropfgrundlagen B.2.2 besitzen vorzugsweise Glasübergangstemperaturen < -30°C, weiter bevorzugt von < -50°C, besonders bevorzugt < -70°C.

Die Pfropfgrundlage B.2.2 der Pfropfpolymerisate B.2 hat im allgemeinen eine mittlere Teilchengröße (D50-Wert) von 0,05 bis 1,00 µm, vorzugsweise 0,10 bis 0,7 µm, weiter bevorzugt 0,15 bis 0,5 µm, und besonders bevorzugt von 0,2 bis 0,4 µm.

Die für die Pfropfpolymerisate B.2 verwendeten Monomere B.2.1 sind vorzugsweise Gemische aus
B.2.1.1 50 bis 90 Gew.-Teilen, besonders bevorzugt 70 bis 80 Gew.-Teilen, jeweils bezogen auf die Summe aus B.2.1.1 und B.2.1.2, Vinylaromaten und/oder kernsubstituierten Vinylaromaten (wie Styrol, α-Methylstyrol, p-Methylstyrol, p-Chlorstyrol) und/oder (Meth)Acrylsäure-(C1-C8)-Alkylester, wie Methylmethacrylat, Ethylmethacrylat), und
B.2.1.2 10 bis 50 Gew.-Teilen, besonders bevorzugt 20 bis 30 Gew.-Teilen, jeweils bezogen auf die Summe aus B.2.1.1 und B.2.1.2, Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid.

Bevorzugte Monomere B.2.1.1 für die Pfropfpolymerisate B.2 sind ausgewählt aus mindestens einem der Monomere Styrol, α-Methylstyrol und Methylmethacrylat, bevorzugte Monomere B.2.1.2 sind ausgewählt aus mindestens einem der Monomere Acrylnitril, Maleinsäureanhydrid und Methylmethacrylat. Besonders bevorzugte Monomere sind B.2.1.1 Styrol und B.2.1.2 Acrylnitril oder B.2.1.1 Styrol und B.2.1.2 Methylmethacrylat oder B.2.1.1 = B.2.1.2 Methylmethacrylat.

Als Pfropfgrundlage B.2.2 der Pfropfpolymerisate B.2 eignen sich beispielsweise Dienkautschuke, EP(D)M-Kautschuke, also solche auf Basis Ethylen/Propylen und gegebenenfalls Dienen, Acrylat-, Polyurethan-, Silikon-, Chloropren-, Ethylen/Vinylacetatsowie Acrylat-Silikon-Komposit-Kautschuke.

Bevorzugte Pfropfgrundlagen B.2.2 sind Dienkautschuke, bevorzugt enthaltend Butadien oder Copolymerisate aus Dienen, bevorzugt enthaltend Butadien, und weiteren copolymerisierbaren Vinyl-Monomeren (z.B. gemäß B.2.1.1 und B.2.1.2) oder Gemische aus einer oder mehrerer der zuvor genannten Komponenten.

Besonders bevorzugt als Pfropfgrundlage B.2.2 für die Pfropfpolymerisate B.2 ist reiner Polybutadienkautschuk. In einer weiteren bevorzugten Ausführungsform handelt es sich bei B.2.2 um Styrol-Butadien-Kautschuk, besonders bevorzugt um Styrol-Butadien-Blockcopolymer-Kautschuk.

Besonders geeignete Pfropfpolymerisate B.2 sind beispielsweise ABS-Polymerisate, in bevorzugter Ausführungsform solche, die im Emulsionspolymerisationsverfahren durch Redox-Initiierung mit einem Initiatorsystem aus organischem Hydroperoxid und Ascorbinsäure gemäß US-P 4 937 285 hergestellt werden.

Weitere besonders geeignete Pfropfpolymerisate B.2 sind MBS-Modifikatoren mit Kern-Schale-Struktur.

In einer besonders bevorzugten Ausführungsform enthält die Komponente B keine Pfropfpolymerisate B.2 auf Basis von Acrylat-, Silikon- oder Acrylat-Silikon-Komposit-Kautschuken als Pfropfgrundlage B.2.2, da diese das Einfärbungsverhalten der erfindungsgemäßen Zusammensetzungen nachteilig beeinflussen.

Besonders bevorzugte kautschukmodifizierte Vinyl(co)polymerisate gemäß Komponente B sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die kautschukmodifizierten Vinyl(co)polymerisate gemäß Komponente B enthalten freies, d.h. nicht an die Kautschukgrundlage(n) B.1.2 bzw. B.2.2 chemisch gebundenes und nicht in den Kautschukpartikeln eingeschlossenes Vinyl(co)polymerisat bestehend aus den Monomeren gemäß B.1.1 oder B.2.1. Dieses kann herstellungsbedingt bei der Polymerisation der Pfropfpolymerisate B.1 bzw. B.2 entstehen oder aber separat polymerisiert und der Komponente B zugemischt werden. Ebenso ist es möglich, dass ein Teil des freien Vinyl(co)polymerisats im kautschukmodifizierten Vinyl(co)polymerisat gemäß Komponente B herstellungsbedingt aus den Polymeren B.1 bzw. B.2 selbst stammt und ein anderer Teil separat polymerisiert und der Komponente B zugesetzt wurde. Der Anteil des freien Vinyl(co)polymerisats (unabhängig von dessen Ursprung), gemessen als in Aceton löslicher Anteil, in der Komponente B beträgt, bezogen auf die Komponente B, bevorzugt mindestens 50 Gew.-%, besonders bevorzugt mindestens 60 Gew-%, weiter bevorzugt mindestens 70 Gew.-%.

Dieses freie Vinyl(co)polymerisat weist in den kautschukmodifizierten Vinyl(co)polymerisaten gemäß Komponente B ein gewichtgemitteltes Molekulargewicht M_{w} 70 bis 250 kg/mol, bevorzugt von 140 bis 200 kg/mol, insbesondere von 150 bis 180 kg/mol auf.

Das gewichtsgemittelte Molekulargewicht Mw des freien Vinyl(co)polymerisats in Komponente B wird im Rahmen der vorliegenden Erfindung per Gelpermeationschromatographie (GPC) in Tetrahydrofuran gegen Polystyrol als Standard gemessen.

### Komponente C

Bei der Komponente C handelt es sich um ein ionenleitfähiges Polymer oder Polymerblend enthaltend mindestens ein Polyether-basiertes Polymer oder Copolymer ausgewählt aus der Gruppe bestehend aus Polyether-Block-Polymeren und Polyether-basierten Polyurethanen und mindestens ein Bor-haltiges Salz.

Bevorzugt handelt es sich bei der Komponente C um ein ionenleitfähiges Polymer oder Polymerblend enthaltend mindestens ein Polyether-Block-Polymer und mindestens ein Bor-haltiges Salz.

Beispiele für die Polyether-Block-Polymere schließen Block-Copolymere enthaltend Polyether-Blöcke und Polymerblöcke ausgewählt aus mindestens einem Vertreter der Gruppe bestehend aus Polyamiden, Polyolefinen, Polyestern und Polyacrylaten ein. Bevorzugt sind Polyether-Block-Amide (PEBA) und Polyetherester-Block-Amide sowie Mischungen aus diesen Polymeren. Besonders bevorzugt sind Polyether-Block-Amide (PEBA).

Bevorzugt enthalten diese Block-Copolymere 10 bis 90 Gew-%, besonders bevorzugt 20 bis 80 Gew.-%, weiter bevorzugt 30 bis 70 Gew.-%, bezogen auf das Block-Copolymer, an Polyetherblöcken.

Der Polyetherblockanteil im Block-Copolymer besteht bevorzugt zu mindestens 50 Gew.-%, besonders bevorzugt zu mindestens 80 Gew.-%, weiter bevorzugt zu mindestens 90 Gew.-% aus Ethylenglykoleinheiten. In der am meisten bevorzugten Ausführungsform handelt es sich bei den Polyetherblöcken um reines Polyethylenglykol.

Bei den in Komponente C zum Einsatz kommenden Polyether-Block-Amiden handelt es sich bevorzugt um solche Polyether-Block-Amide (PEBA), welche aus thermoplastischen Hartsegmenten aus Polyamidsequenzen und elastomeren Weichsegmenten aus Polyethersequenzen bestehen, welche entweder über Ester- oder Amidgruppen miteinander verknüpft sind. Zu solchen Polyether-Block-Amiden gelangt man durch Verknüpfung endständig funktionalisierter, bevorzugt endständig carboxylatfunktionalisierter Oligoamide mit difunktionellen Oligoethern, bevorzugt mit Oligoethern mit Hydroxyl- oder Aminoendgruppen. Als Polyamid kommt in den Polyether-Block-Amiden (PEBA) bevorzugt Polyamid 12 zum Einsatz.

Die Polyether-Block-Amide (PEBA) bestehen besonders bevorzugt aus Polyethylenglykol-und Polyamid 12-Blöcken.

In einer bevorzugten Ausführungsform enthält die Komponente C als Polyether-basiertes Polymer ein Polyether-Block-Polymer bestehend zu 10 bis 90 Gew-%, besonders bevorzugt 20 bis 80 Gew.-%, weiter bevorzugt 30 bis 70 Gew.-%, bezogen auf das Block-Copolymer, aus Polyethylenglykolblöcken und zu 10 bis 90 Gew-%, besonders bevorzugt 20 bis 80 Gew.-%, weiter bevorzugt 30 bis 70 Gew.-%, bezogen auf das Block-Copolymer, aus Polyamid-12.

Die in Komponente C zum Einsatz kommenden Polyether-Block-Polymere sind literaturbekannt und z.B. in US 4871804 (Daicel), EP 730005 (General Electric), EP 613919 (Sanyo Kasai), EP 1046675 (Arkema), EP 1155065 (Arkema) EP 1262527 (Arkema) sowie JP 09137053 (Asahi) offenbart.

Komponente C enthält das Polyether-basierte Polymer oder Copolymer vorzugsweise in einer Konzentration von 49,8 bis 99,8 Gew.-%, besonders bevorzugt von 69,6 bis 98,6 Gew.-%, weiter bevorzugt von 79,0 bis 89,0 Gew.-%.

Komponente C enthält bevorzugt 0,2 bis 10,0 Gew.-%, weiter bevorzugt 0,4 bis 4,0 Gew.-%, am stärksten bevorzugt 1,0 bis 3,0 Gew.-%, jeweils bezogen auf die Komponente C, eines Bor-haltigen Salzes.

Bei dem Bor-haltigen Salz in Komponente C handelt es sich bevorzugt um mindestens ein Alkalisalz eines borzentrierten anionischen Komplexes enthaltend zweizähnige Liganden ausgewählt aus der Gruppe bestehend aus C2-C8-aliphatischen oder aromatischen Komponenten mit mindestens zwei reaktiven Gruppen ausgewählt aus -COOH und -OH. In besonders bevorzugter Ausführungsform handelt es sich bei dem Bor-haltigen Salz in Komponente C um ein Alkalisalz des Bis(oxalato)borat-Anions, besonders bevorzugt um Kaliumbis(oxalato)borat oder Natriumbis(oxalato)borat, am stärksten bevorzugt um Kaliumbis(oxalato)borat.

Komponente C kann weitere Polymere ausgewählt aus mindestens einem Vertreter aus der Gruppe bestehend aus Polyamiden, Polyestern, Poly(meth)acrylaten, Polymethyl(meth)acrylaten und Polyurethanen enthalten. Bevorzugt enthält Komponente C ein weiteres Polymer ausgewählt aus der Gruppe bestehend aus Poly(meth)acrylaten und Polymethyl(meth)acrylaten, besonders bevorzugt Polymethylmethacrylat. Dieses weitere Polymer kommt in Komponente C in einer Konzentration von 0 bis 50,0 Gew.-%, bevorzugt von 1,0 bis 30,0 Gew.-%, besonders bevorzugt von 10,0 bis 20,0 Gew.-%, jeweils bezogen auf die Komponente C, zum Einsatz.

Komponente C kann ein oder mehrere Ionomere enthalten. Bevorzugt kommen Ionomere zum Einsatz, welche durch Neutralisierung von Co- oder Terpolymeren bestehend aus Ethylen und Acrylsäure und/oder Methacrylsäure gebildet werden.

Besonders bevorzugt enthält Komponente C
- 49,8 bis 99,8 Gew.-%, weiter bevorzugt 69,6 bis 98,6 Gew.-%, am stärksten bevorzugt 79 bis 89 Gew.-% Polyether-Block-Polymer bestehend zu 10 bis 90 Gew-%, besonders bevorzugt 20 bis 80 Gew.-%, weiter bevorzugt 30 bis 70 Gew.-%, bezogen auf das Block-Copolymer, aus Polyethylenglykolblöcken und zu 10 bis 90 Gew-%, besonders bevorzugt 20 bis 80 Gew.-%, weiter bevorzugt 30 bis 70 Gew.-%, bezogen auf das Block-Copolymer, aus Polyamid-12,
- 0 bis 50 Gew.-%, weiter bevorzugt 1 bis 30 Gew.-%, am stärksten bevorzugt 10 bis 20 Gew.-% eines weiteren Polymers ausgewählt aus mindestens einem Vertreter aus der Gruppe bestehend aus Poly(meth)acrylaten und Polymethyl(meth)acrylaten, besonders bevorzugt Polymethylmethacrylat und
- 0,2 bis 10 Gew.-%, weiter bevorzugt 0,4 bis 4,0 Gew.-%, am stärksten bevorzugt 1,0 bis 3,0 Gew.-% eines Alkalisalzes eines borzentrierten anionischen Komplexes enthaltend zweizähnige Liganden ausgewählt aus der Gruppe bestehend aus C2-C8-aliphatischen oder aromatischen Komponenten mit mindestens zwei reaktiven Gruppen ausgewählt aus -COOH und -OH, besonders bevorzugt eines Vertreters der Gruppe bestehend aus Kaliumbis(oxalato)borat und Natriumbis(oxalato)borat, insbesondere bevorzugt Kaliumbis(oxalato)borat.

In am stärksten bevorzugter Ausführungsform besteht Komponente C aus den zuvor genannten Bestandteilen, d.h. enthält keine weiteren Bestandteile.

In einer weiteren Ausführungsform weist die Komponente C einen spezifischen Oberflächenwiderstand von kleiner 1·10⁹ Ω, bevorzugt kleiner 1·10⁸ Ω auf.

Der spezifische Oberflächenwiderstand wird im Rahmen der vorliegenden Erfindung gemäß IEC 60093 (in der Version von 1993) bestimmt.

In einer weiteren Ausführungsform werden die verschiedenen Bestandteile der Komponente C zu einem Präcompound verarbeitet und als Präcompound zur Herstellung der erfindungsgemäßen Formmassen eingesetzt.

Als Komponente C geeignet ist beispielsweise IonPhaseE® IPE® U1 der Firma IonPhaseE Oy (Tampere, Finnland). In einer bevorzugten Ausführungsform wird als Komponente C dieses Handelsprodukt verwendet.

### Komponente D

Als Komponente D kommen UV-Stabilisatoren ausgewählt aus mindestens einem Vertreter aus der Gruppe bestehend aus den Substanzklassen der Benzotriazole und Triazine, besonders bevorzugt der dimeren Benzotriazole und der 1,3,5-Triazine zum Einsatz.

Erfindungsgemäß geeignete Benzotriazole werden beispielsweise von der BASF AG (Ludwigshafen, Deutschland) unter den Handelsnamen Tinuvin™ 360, Tinuvin™ 213, Tinuvin™ P, Tinuvin™ 234, Tinuvin™ 326, Tinuvin™ 328, Tinuvin™ 329, Tinuvin™ 350 und Tinuvin™ 571 angeboten. Bevorzugt ist der Einsatz von dimereren Benzotriazolen.

Besonders bevorzugt ist der Einsatz von 2,2'-Methylenebis[6-(2H-benzotriazol-2-yl)-4-(1,1,3,3-tetramethylbutyl)phenol]gemäß der Formel 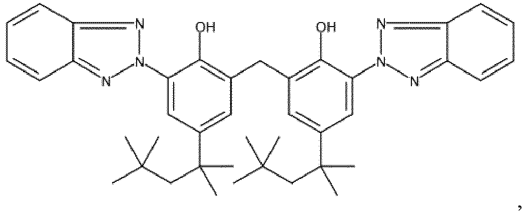 welches beispielsweise unter dem Handelsnamen Tinuvin™ 360 angeboten wird.

Erfindungsgemäß geeignete Triazine werden beispielsweise von der BASF AG (Ludwigshafen, Deutschland) unter den Handelsnamen Tinuvin™ 1577 und Tinuvin™ 1600 sowie von der Adeka Palmarole SAS (Mulhouse, Frankreich) unter dem Handelsnamen ADK Stab™ LA46 angeboten.

In einer bevorzugten Ausführungsform wird ein 2-(4,6-Diaryl-1,3,5-triazin-2-yl)-5-(alkoxy)phenol der allgemeinen Formel 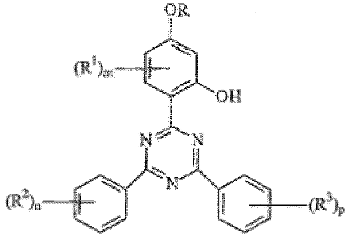 als UV-Stabilisator eingesetzt, in der
R¹, R² und R³ unabhängig voneinander für gleiche oder verschiedene Reste ausgewählt aus der Gruppe bestehend aus Cl- bis C8-Alkyl oder Cl- bis C8-Aryl, n und p unabhängig voneinander jeweils für eine ganze Zahl von 0 bis 5, bevorzugt für 0, 1 oder 2, besonders bevorzugt für 0 oder 1,
m für eine ganze Zahl von 0 bis 4, bevorzugt für 0 oder 1, besonders bevorzugt für 0 und
R für einen beliebigen organischen Rest aus Kohlenstoff, Wasserstoff und optional Sauerstoff, bevorzugt für Cl- bis C10-Alkyl
stehen,
wobei R² und R³ bevorzugt für Methyl oder Phenyl, besonders bevorzugt für Phenyl steht.

Weiter bevorzugt handelt es sich um mindestens einen Vertreter ausgewählt aus der Gruppe bestehend aus 2-(4,6-Diphenyl-1,3,5-triazin-2-yl)-5-(hexyloxy)phenol, 2-(4,6-Diphenyl-1,3,5-triazin-2-yl)-5-[2-(2-ethylhexanoyloxy)ethoxy]phenol und der Verbindung gemäß der Formel 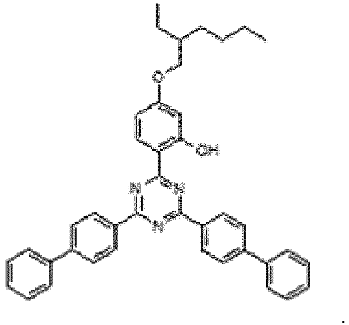 Besonders bevorzugt handelt es sich bei dem erfindungsgemäß zum Einsatz kommenden Triazin um die Verbindung der Formel

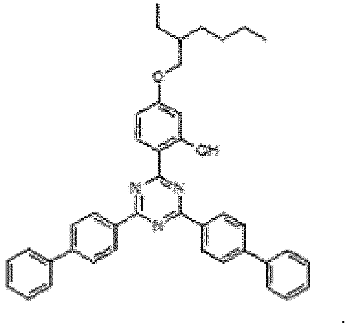

Diese wird von der BASF AG unter dem Handelsnamen Tinuvin™ 1600 angeboten.

In einer bevorzugten Ausführungsform kommt als UV-Stabilisator mindestens ein Vertreter ausgewählt aus der Gruppe bestehend aus den Verbindungen der Formeln 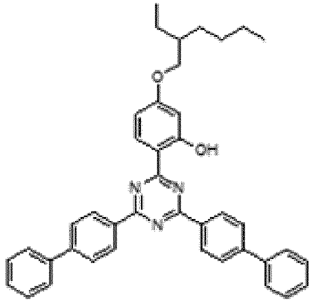 und 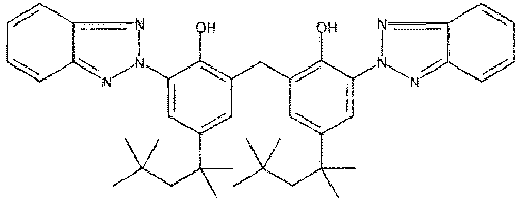 zum Einsatz.

### Komponente E

Die Zusammensetzung kann als Komponente E ein oder mehrere weitere Additive enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, weiteren von Komponente C verschiedenen Antistatika bzw. Leitfähigkeitsadditiven, weiteren von Komponente D verschiedenen Stabilisatoren (z.B. Hydrolyse-, Wärmealterungs- und Umesterungsstabilisatoren, weitere von Komponente D verschiedene UV-Stabilisatoren und Säure-/Basenquenchern), Farbmittel (z. B. organische oder anorganische Pigmente wie Titandioxid, Azopigmente und Ruß sowie organische lösliche Farbstoffe), Fließfähigkeitspromotoren, Verträglichkeitsvermittlern, weiteren von Komponente B verschiedenen Schlagzähigkeitsmodifikatoren ohne Kern-Schale-Struktur, weiteren von den Komponenten A bis C verschiedenen polymeren Bestandteile (beispielsweise funktionelle Blendpartner) sowie Füll- und Verstärkungsstoffen (beispielsweise Karbonfasern, Talk, Glimmer, Kaolin, CaCO₃).

In bevorzugter Ausführungsform ist die Zusammensetzung frei von Flammschutzmitteln, Antidrippingmitteln, Flammschutzsynergisten und Rauchinhibitoren.

In ebenfalls bevorzugter Ausführungsform ist die Zusammensetzung frei von Füll- und Verstärkungsstoffen.

In weiterhin bevorzugter Ausführungsform ist die Zusammensetzung frei von weiteren, von Komponente C verschiedenen Antistatika bzw. Leitfähigkeitsadditiven.

In weiterhin bevorzugter Ausführungsform ist die Zusammensetzung frei von weiteren, von Komponente D verschiedenen UV-Stabilisatoren.

In besonders bevorzugter Ausführungsform ist die Zusammensetzung frei von Flammschutzmitteln, Antidrippingmitteln, Flammschutzsynergisten, Rauchinhibitoren, Füll- und Verstärkungsstoffen, weiteren von Komponente C verschiedenen Antistatika bzw. Leitfähigkeitsadditiven sowie weiteren von Komponente D verschiedenen UV-Stabilisatoren.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren und Verträglichkeitsvermittlern.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten, Schwefel-basierten Co-Stabilisatoren und organischen oder anorganischen Brönstedt-Säuren.

### Herstellung der Formmassen und Formkörper

Die erfindungsgemäßen thermoplastischen Formmassen können beispielsweise hergestellt werden, indem man die jeweiligen Bestandteile in bekannter Weise vermischt und bei Temperaturen von bevorzugt 200°C bis 320°C, besonders bevorzugt bei 240 bis 300°C in üblichen Aggregaten wie beispielsweise Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist auch ein Verfahren zur Herstellung der erfindungsgemäßen Zusammensetzungen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Insbesondere eignen sich die erfindungsgemäßen Formmassen zur Herstellung von dauerhaft antistatischen Formteilen mit geringer Neigung zur Staubanziehung, besonders bevorzugt für unbeschichtete dekorative Bauteile im Automobilinnenraum.

Die vorliegende Erfindung betrifft auch die Verwendung der vorgestellten und beanspruchten Zusammensetzungen zur Herstellung von Formkörpern, sowie eben diese Formkörper, die eine dieser Zusammensetzungen enthalten.

### Beispiele

### Komponente A:

Lineares Polycarbonat auf Basis Bisphenol-A mit einem gewichtsgemittelten Molekulargewicht M_{W} von 30.000 g/mol (bestimmt durch GPC in Methlylenchlorid gegen einen BPA-PC-Standard).

### Komponente B1:

Acrylnitril-Butadien-Styrol (ABS)-Polymer, hergestellt im Masse-Polymerisationsverfahren, welches eine disperse Phase aus Polybutadien-haltigen Kautschukpartikeln mit Inklusionen aus Styrol-Acrylnitril-Copolymerisat und eine Styrol-Acrylnitril-Copolymerisat-Matrix enthält, ein A:B:S-Verhältnis von 23:10:67 Gew.-% und einen Gelgehalt, bestimmt als in Aceton unlöslicher Anteil, von 20 Gew.-% aufweist. Das freie, das heißt in Aceton lösliche Styrol-Acrylnitril-Copolymer in Komponente B1 weist ein gewichtsgemitteltes Molekulargewicht M_{w} (gemessen per GPC in Aceton als Lösungsmittel mit Polystyrol als Standard) von 165 kg/mol auf. Die mittlere Kautschukpartikelgröße D50, gemessen per Ultrazentrifugation, beträgt 0,85 µm. Die Schmelzeflussrate (MVR) der Komponente B1, gemessen nach ISO 1133 (Version von 2012) bei 220°C mit einer Stempellast von 10 kg, beträgt 6,7 ml/10 min.

### Komponente B2:

ABS-Abmischung aus 20 Gew.-% eines Acrylnitril-Butadien-Styrol (ABS)-Pfropfpolymers, hergestellt im Emulsions-Polymerisationsverfahren mit einem A:B:S-Verhältnis von 14:50:36 Gew.-% und 80 Gew.-% eines Styrol-Acrylnitril-Copolymerisats mit einem Acrylnitril:Styrol-Verhältnis von 25:75 Gew.-% und einem gewichtsgemittelten Molekulargewicht M_{w} (gemessen per GPC in Aceton als Lösungsmittel mit Polystyrol als Standard) von 110 kg/mol. Die Mischung weist somit ein A:B:S-Verhältnis von 23:10:67 Gew.-% auf. Die mittlere Kautschukpartikelgröße D50, gemessen per Ultrazentrifugation, beträgt 0,32 µm. Die Kautschukpartikel enthalten keine Inklusionen.

### Komponente B3:

ASA-Abmischung aus 37 Gew.-% eines Pfropfpolymers mit einem Polybutylacrylatkautschukkern und einer Polymethylmethacrylat-Hülle, wobei das Pfropfpolymer ein Kern/Hüllen-Verhältnis von 70:30 Gew.-% aufweist, hergestellt im Emulsions-Polymerisationsverfahren, und 63 Gew.-% eines Styrol-Acrylnitril-Copolymerisats mit einem Acrylnitril:Styrol-Verhältnis von 24:76 Gew.-% . Die Mischung weist somit einen Butylacrylatkautschukgehalt von 26 Gew.-% auf.

### Komponente C1:

Mischung enthaltend 15 Gew.-% Polymethylmethacrylat, 83,5 Gew.-% eines Polyetheramid-Block-Polymers (PEBA) bestehend zu 50 Gew.-%, bezogen auf das PEBA, an Polyethylenglykolblöcken und zu 50 Gew.-%, bezogen auf das PEBA, an Polyamid-12-Blöcken, sowie 1,5 Gew.-% Kaliumbis(oxalato)borat. C1 weist einen spezifischen Oberflächenwiderstand (gemessen nach IEC 60093 in der Version von 1993) von 8·10⁷ Ω auf.

### Komponente C2:

Polyetheramid-Blockcopolymer (PEBA) bestehend zu 50 Gew.-%, bezogen auf das PEBA, an Polyethylenglykolblöcken und zu 50 Gew.-%, bezogen auf das PEBA, an Polyamid-12-Blöcken. Dabei handelt es sich um das in WO 2012/084848 A1 als Komponente C erfindungsgemäß eingesetzte Polyetheramid-Block-Copolymer. C2 weist einen spezifischen Oberflächenwiderstand (gemessen nach IEC 60093 in der Version von 1993) von 3·10⁹ Ω auf.

### Komponente D1:

Tinuvin™ 360 (BASF, Ludwigshafen, Deutschland):
2,2'-Methylenebis[6-(2H-benzotriazol-2-yl)-4-(1,1,3,3-tetramethylbutyl)phenol]

### Komponente D2:

Tinuvin™ 1600 (BASF, Ludwigshafen, Deutschland):

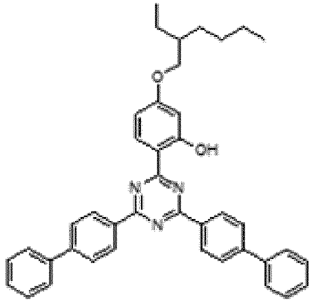

### Komponente D3:

Tinuvin™ 329 (BASF, Ludwigshafen, Deutschland):
2-(2H-Benzotriazol-2-yl)-4-(1,1,3,3-tetramethylbutyl)phenol

### Komponente E1:

Titandioxid-Pigment: Kronos™ 2233 (Kronos Titan GmbH, Leverkusen, Deutschland)

### Komponente E2:

Rutil-Pigment: Heucodur™ Yellow 3R (Heubach GmbH, Langelsheim, Deutschland)

### Komponente E3:

Eisenoxid-Pigment: Bayferrox™ 180M (Lanxess AG, Köln, Deutschland)

### Komponente E4:

Ruß: Elftex™ 570 Pearls (Cabot GmbH, Rheinfelden, Deutschland)

### Komponente E5:

Pentaerythrittetrastearat

### Komponente E6:

Irgafos™ 168 (BASF; Ludwigshafen, Deutschland):
Tris(2,4-di-tert.-butyl-phenyl)-phosphit

### Komponente E7:

Irganox™ 1076 (BASF; Ludwigshafen, Deutschland):
2,6-Di-tert.-butyl-4-(octadecanoxycarbonylethyl)phenol

### Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 260°C und unter Anlegen eines Unterdrucks von 50 mbar (absolut). Die Formkörper wurden mit Ausnahme der Prüfkörper für den Durchstoßversuch bei 260°C Massetemperatur und bei einer Werkzeugtemperatur von 80°C auf einer Spritzgießmaschine Typ Arburg 270 E hergestellt. Die Prüfkörper für den Durchstoßversuch wurden bei 300°C Massetemperatur bei ansonsten denselben Verarbeitungsparametern hergestellt.

Die Schmelzflussrate (MVR) wurde bestimmt nach ISO 1133 (Version von 2012) bei 280°C mit einer Stempellast von 5 kg nach einer 5-minütigen Verweilzeit.

Als Maß für die thermische Verarbeitungsstabilität der Zusammensetzung diente die relative Änderung des MVRs (deltaMVR) gemessen nach ISO 1133 (Version von 2012) bei 280°C mit einer Stempellast von 5 kg nach einer 15-minütigen verglichen mit der 5-minütigen Verweilzeit.

Die Kerbschlagzähigkeit nach IZOD wurde bestimmt bei -30°C gemäß ISO 180-1A (Version von 1982) an jeweils zehn Prüfkörpern der Abmessung 80 mm x 10 mm x 4mm. Als zähes Bruchverhalten wurden Kerbschlagzähigkeitseinzelwerte >30 kJ/m² gewertet.

Als Zäh-Spröd-Übergangstemperatur im IZOD-Kerbschlagversuch wurde diejenige Temperatur definiert, bei der jeweils etwa die Hälfte der Prüfkörper ein zähes bzw. sprödes Bruchverhalten gemäß der Definition zuvor aufweisen.

Der Vicat B/120 als Maß für die Wärmeformbeständigkeit wurde bestimmt gemäß ISO 306 (Version von 2013) an Prüfkörpern der Abmessung 80 mm x 10 mm x 4mm mit einer Stempellast von 50 N und einer Aufheizgeschwindigkeit von 120°C/h.

Als Maß für die Tieftemperaturduktilität im praxisrelevanten Schlag-/Crashversuch diente das Verhalten im multiaxialen Durchstoßversuch. Der Durchstoßversuch wurde bei -30°C in Anlehnung an ISO 6603-2 (Version von 2000, in Anlehnung bedeutet, dass keine Sichtkontrolle der Probekörper durchgeführt wurde) an Prüfkörpern der Abmessung 60 mm x 60 mm x 2 mm durchgeführt. Diese wurden bei einer erhöhten Massetemperatur von 300°C gefertigt, um besonders kritische Verarbeitungsbedingungen zu simulieren. Es wurden die Bruchbilder von insgesamt zehn Prüfkörpern dahingehend beurteilt, ob ein zähes (nicht splitterndes) oder sprödes (splitterndes) Bruchbild auftritt.

Der spezifische Oberflächenwiderstand wurde nach IEC 60093 (Version von 1993) an Rundplatten mit 60 mm Durchmesser und einer Dicke von 2 mm bestimmt.

Die Lichtbeständigkeit wurde beurteilt in der Heißlichtbewitterung nach VW-Standard PV1303 (Version von 2001). Nach jeweils 3 und 6 Bewitterungszyklen wurde der Graumaßstab an Farbmusterplatten der Dimension 60 mm x 40 mm x 2 mm relativ zum Ausgangszustand vor der Belichtung ermittelt.

**Tabelle 1: Zusammensetzungen und ihre Eigenschaften**

| **Komponenten [Gew.- Teile]** | **1** | **2** | **3** | **V4** | **V5** | **V6** | **V7** | **V8** |
|---|---|---|---|---|---|---|---|---|
| A | 70 | 70 | 70 | 70 | 70 | 70 | 70 | 70 |
| B1 | 23 | 23 | 23 | 23 | 23 | 23 | | |
| B2 | | | | | | | 23 | |
| B3 | | | | | | | | 23 |
| C1 | 7 | 7 | 7 | | | | 7 | 7 |
| C2 | | | | 7 | 7 | 10 | | |
| D1 | 0,25 | | | | | | | |
| D2 | | 0,25 | | | 0,25 | | 0,25 | |
| D3 | | | 0,25 | 0,25 | | 0,25 | | |
| E1 | 4,77 | 4,77 | 4,77 | 4,77 | 4,77 | 4,77 | 4,77 | 4,77 |
| E2 | 0,28 | 0,28 | 0,28 | 0,28 | 0,28 | 0,28 | 0,28 | 0,28 |
| E3 | 0,05 | 0,05 | 0,05 | 0,05 | 0,05 | 0,05 | 0,05 | 0,05 |
| E4 | 0,03 | 0,03 | 0,03 | 0,03 | 0,03 | 0,03 | 0,03 | 0,03 |
| E5 | 0,75 | 0,75 | 0,75 | 0,75 | 0,75 | 0,75 | 0,75 | 0,75 |
| E6 | 0,08 | 0,08 | 0,08 | 0,08 | 0,08 | 0,08 | 0,08 | 0,08 |
| E7 | 0,22 | 0,22 | 0,22 | 0,22 | 0,22 | 0,22 | 0,22 | 0,22 |

| Eigenschaften | | | | | | | | |
|---|---|---|---|---|---|---|---|---|
| Kerbschlagzähigkeit (-30°C) [kJ/m²] | 55 | 55 | 54 | 57 | 58 | 34 | 15 | 15 |
| % duktiles Bruchverhalten im Durchstoßversuch (-30°C) | 100 | 100 | 100 | 90 | 100 | 100 | 0 | 0 |
| Zäh-Spröd-Übergangstemperatur im IZOD- Kerbschlagversuch [°C] | -35 | -35 | -35 | -35 | -35 | -30 | -5 | +/-0 |
| Vicat B/120 [°C] | 129 | 130 | 129 | 128 | 128 | 128 | 128 | 125 |
| MVR(280°C/5kg/5min) [ml/10min] | 34 | 34 | 35 | | | | | |
| MVR(280°C/5kg/15min) [ml/10min] | 51 | 49 | 58 | | | | | |
| Delta MVR (5min → 15 min) [%] | 50% | 44% | 66% | | | | | |
| Oberflächenwiderstand [Ω] | 7·10¹¹ | 6·10¹¹ | 1·10¹² | 6·10¹² | 5·10¹² | 1·10¹² | 4·10¹¹ | 8·10¹¹ |
| Graumaßstab nach 3 Zyklen | 4 | 4 | 4 | 4 | 4 | 4 | 4 | 5 |
| Graumaßstab nach 6 Zyklen | 4 | 5 | 4 | 3 | 3 | 3 | 4 | 4 |

Die Daten in Tabelle 1 zeigen, daß die erfindungsgemäßen Zusammensetzungen 1-3 gegenüber den Vergleichsbeispielen der Zusammensetzungen 4-8 eine verbesserte Kombination aus exzellenter Tieftemperaturduktilität im Kerbschlag- als auch Durchstoßversuch, elektrischer Ableitfähigkeit (d.h. einen reduzierten elektrischen Oberflächenwiderstand) sowie Belichtungsstabilität in der Heißlichtalterung aufweisen.

Des Weiteren zeigt ein Vergleich der erfindungsgemäßen Zusammensetzungen 1 und 2 mit der ebenfalls erfindungsgemäßen Zusammensetzung 3, dass die Verwendung von UV-Stabilisatoren aus der Gruppe bestehend aus den Substanzklassen der dimeren Benzotriazole und der 1,3,5-Triazine zu weiteren Vorteilen hinsichtlich der Verarbeitungsstabilität führen und diese speziellen UV-Stabilisatoren somit im Hinblick auf dies Erzielung eines optimiertes Eigenschaftsprofils bevorzugt zum Einsatz kommen sollten.

Die Vergleichsbeispiele 4 und 5, in denen ein nicht erfindungsgemäßes Antistatikum gemäß dem Stand der Technik zum Einsatz kommt, weisen eine schlechtere elektrische Ableitfähigkeit sowie eine schlechtere Belichtungsbeständigkeit auf. Setzt man das Antistatikum gemäß dem Stand der Technik in einer höheren Konzentration ein (Vergleichsbeipiel 6), so resultiert zwar eine verbesserte elektrische Ableitfähigkeit, allerdings auf Kosten der Tieftemperaturduktilität. Eine Verbesserung der elektrischen Ableitfähigkeit auf das Niveau, das mit den erfindungsgemäßen Zusammensetzungen erreicht wird, wird aber durch eine solche Konzentrationserhöhung nicht erzielt.

Die Vergleichsbeispiele 7 und 8 wiederum zeigen, dass mit ABS- und ASA-Vinylcopolymerisaten gemäß dem Stand der Technik unter Einsatz des erfindungsgemäßen Antistatikums zwar ebenfalls eine gute elektrische Ableitfähigkeit und Belichtungsbeständigkeit erzielt werden kann, jedoch nicht die Kombination mit einer hohen Duktilität bei tiefen Temperaturen resultiert.

## Patentansprüche

1. Zusammensetzungen enthaltend
A) 50 bis 90 Gew.-% mindestens eines Polymers ausgewählt aus der Gruppe bestehend aus aromatischem Polycarbonat, aromatischem Polyestercarbonat und aromatischem Polyester,
B) 5 bis 40 Gew.-% Polymer enthaltend
B.1 mindestens ein kautschukmodifiziertes Vinyl(co)polymerisat enthaltend
B.1.1 80 bis 95 Gew.-%, bezogen auf B.1, wenigstens eines Vinylmonomeren und
B.1.2 5 bis 20 Gew.-%, bezogen auf B.1, einer oder mehrerer kautschukelastischer Polybutadien-haltiger Pfropfgrundlagen,
wobei B.1
mit den Vinylmonomeren B.1.1 gepfropfte Polybutadien-haltige Kautschukpartikel, die Inklusionen aus Vinyl(co)polymerisat bestehend aus den Vinylmonomeren B.1.1 enthalten,
und
eine nicht an diese Kautschukpartikel gebundene und nicht in Kautschukpartikel eingeschlossene Vinyl(co)polymerisat-Matrix bestehend aus den Vinylmonomeren B.1.1 enthält
und optional B.2 weitere mit Vinylmonomeren gepfropfte Kautschukpartikel aus
B.2.1 5 bis 75 Gew.-%, bezogen auf B.2, wenigstens eines Vinylmonomeren auf
B.2.2 25 bis 95 Gew.-%, bezogen auf B.2, einer oder mehrerer kautschukelastischer Pfropfgrundlagen,
C) 3 bis 25 Gew.-% einer Mischung enthaltend a) mindestens ein Polyether-basiertes Polymer oder Copolymer ausgewählt aus der Gruppe bestehend aus Polyether-Block-Polymeren und Polyether-basierten Polyurethanen und b) mindestens ein Bor-haltiges Salz,
D) 0 bis 2 Gew.-% mindestens eines UV-Stabilisators ausgewählt aus der Gruppe bestehend aus den Substanzklassen der Benzotriazole und Triazine,
E) 0 bis 20 Gew.-% eines oder mehrerer weiterer Additive,
wobei die Zusammensetzungen enthaltend die Komponenten A) bis E) einen Polybutadiengehalt von 1 bis 5 Gew.-% aufweisen.

2. Zusammensetzungen gemäß Anspruch 1, wobei die Komponente A aromatisches Polycarbonat ist.

3. Zusammensetzungen gemäß einem der vorherigen Ansprüche, wobei Komponente B.1 in Masse-Polymerisationsverfahren hergestellt wird und die Vinyl(co)polymerisat-Inklusionen enthaltenden Kautschukpartikel in der Komponente B.1 einen mittleren Partikeldurchmesser D50, gemessen mittels Ultrazentrifugenmessung, von 0,5 bis 1,5 µm aufweisen.

4. Zusammensetzungen gemäß einem der vorherigen Ansprüche, wobei die Komponente B.1 einen Polybutadiengehalt von 8 bis 13 Gew.-% aufweist.

5. Zusammensetzungen gemäß einem der vorherigen Ansprüche, wobei der nicht an Kautschukpartikel gebundene und nicht in Kautschukpartikel eingeschlossene Vinyl(co)polymerisat Anteil der Komponente B ein gewichtsgemitteltes Molekulargewicht, ermittelt mittels Gelpermeationschromatographie in Tetrahydrofuran gegen Polystyrol als Standard, von 140 bis 200 kg/mol aufweist.

6. Zusammensetzungen gemäß einem der vorherigen Ansprüche, wobei die Komponente B.2 hergestellt ist in Emulsions-Polymerisation durch Pfropfung von B
.2.1 25 bis 50 Gew.-%, bezogen auf das Pfropfpolymerisat B.2, wenigstens eines Vinylmonomeren auf
B.2.2 50 bis 75 Gew.-%, bezogen auf das Pfropfpolymerisat B.2, einer oder mehrerer kautschukelastischer Pfropfgrundlagen mit Glasübergangstemperaturen, ermittelt nach dem in der Beschreibung angegebenen Verfahren, von < -70°C und mit mittleren Teilchengrößen D50, gemessen mittels Ultrazentrifugenmessung, von 0,2 bis 0,4 µm.

7. Zusammensetzungen gemäß einem der vorherigen Ansprüche, wobei die Zusammensetzungen frei sind von Polyacrylat- und Silikon-Kautschuken sowie von Pfropfpolymeren, die solche Kautschuke als Pfropfgrundlage enthalten.

8. Zusammensetzungen gemäß einem der vorherigen Ansprüche, wobei Komponente B zu mindestens 70 Gew.-% aus Komponente B.1 besteht.

9. Zusammensetzungen gemäß einem der vorherigen Ansprüche, wobei das Polyether-basierte Polymer aus Komponente C) ein Polyether-Amid-Blockcopolymer bestehend aus 30 bis 70 Gew.-%, bezogen auf das Block-Copolymer, an Polyethylenglykolblöcken und zu 30 bis 70 Gew.-%, bezogen auf das Block-Copolymer, an Polyamid ist.

10. Zusammensetzungen gemäß einem der vorherigen Ansprüche, wobei es sich bei dem Bor-haltigen Salz in Komponente C um mindestens ein Alkalisalz eines borzentrierten anionischen Komplexes enthaltend zweizähnige Liganden ausgewählt aus der Gruppe bestehend aus C2-C8-aliphatischen oder aromatischen Komponenten mit mindestens zwei reaktiven Gruppen ausgewählt aus -COOH und -OH handelt.

11. Zusammensetzungen gemäß Anspruch 9, wobei es sich bei dem Bor-haltigen Salz um Kaliumbis(oxalato)borat oder Natriumbis(oxalato)borat handelt.

12. Zusammensetzungen gemäß einem der vorherigen Ansprüche, wobei die Komponente C besteht aus
- 69,6 bis 98,6 Gew.-% Polyether-Block-Polymer bestehend zu 30 bis 70 Gew.-%, bezogen auf das Polyether-Block-Polymer, aus Polyethylenglykolblöcken und zu 70 bis 30 Gew.-%, bezogen auf das Polyether-Block-Polymer, aus Polyamid-12-Blöcken,
- 1 bis 30 Gew.-% mindestens eines weiteren Polymers ausgewählt aus der Gruppe bestehend aus Poly(meth)acrylaten und Polymethyl(meth)acrylaten und
- 0,4 bis 4,0 Gew.-% mindestens eines Vertreters ausgewählt aus der Gruppe bestehend aus Kaliumbis(oxalato)borat und Natriumbis(oxalato)borat.

13. Zusammensetzungen gemäß einem der vorherigen Ansprüche, wobei die Komponente D ausgewählt ist aus der Gruppe bestehend aus den Substanzklassen der dimeren Benzotriazole und der 1,3,5-Triazine.

14. Verwendung von Zusammensetzungen gemäß einem der Ansprüche 1 bis 13 zur Herstellung von Formkörpern.

15. Formkörper erhältlich aus Zusammensetzungen gemäß einem der Ansprüche 1 bis 13.

## Claims

1. Compositions comprising
A) 50% to 90% by weight of at least one polymer selected from the group consisting of aromatic polycarbonate, aromatic polyestercarbonate and aromatic polyester,
B) 5% to 40% by weight of polymer containing B.
1 at least one rubber-modified vinyl (co)polymer containing
B.1.1 80% to 95% by weight, based on B.1, of at least one vinyl monomer and
B.1.2 5% to 20% by weight, based on B.1, of one or more elastomeric polybutadiene-containing graft bases,
where B.1 contains
polybutadiene-containing rubber particles which have been grafted with the vinyl monomers B.1.1 and contain inclusions of vinyl (co)polymer consisting of the vinyl monomers B.1.1, and
a vinyl (co)polymer matrix consisting of the vinyl monomers B.1.1 which is not bound to these rubber particles and is not included in rubber particles,
and optionally B.2 further rubber particles grafted with vinyl monomers and composed of
B.2.1 5% to 75% by weight, based on B.2, of at least one vinyl monomer and
B.2.2 25% to 95% by weight, based on B.2, of one or more elastomeric graft bases,
C) 3% to 25% by weight of a mixture comprising a) at least one polyether-based polymer or copolymer selected from the group consisting of polyether block polymers and polyether-based polyurethanes and b) at least one boron-containing salt,
D) 0% to 2% by weight of at least one UV stabilizer selected from the group consisting of the substance classes of the benzotriazoles and triazines,
E) 0% to 20% by weight of one or more further additives,
wherein the compositions comprising components A) to E) have a polybutadiene content of 1% to 5% by weight.

2. Compositions according to Claim 1, wherein component A is aromatic polycarbonate.

3. Compositions according to either of the preceding claims, wherein component B.1 is produced in bulk polymerization methods and the rubber particles containing vinyl (co)polymer inclusions in component B.1 have a median particle diameter D50, measured by means of ultracentrifugal measurement, of 0.5 to 1.5 µm.

4. Compositions according to any of the preceding claims, wherein component B.1
has a polybutadiene content of 8% to 13% by weight.

5. Compositions according to any of the preceding claims, wherein the vinyl (co)polymer content of component B that is not bound to rubber particles and not included in rubber particles has a weight-average molecular weight, determined by means of gel permeation chromatography in tetrahydrofuran against polystyrene as standard, of 140 to 200 kg/mol.

6. Compositions according to any of the preceding claims, wherein component B.2 has been produced in emulsion polymerization by grafting of
B.2.1 25% to 50% by weight, based on the graft polymer B.2, of at least one vinyl monomer and
B.2.2 50% to 75% by weight, based on the graft polymer B.2, of one or more elastomeric graft bases with glass transition temperatures, determined by the method stated in the description, of < -70°C and with median particle sizes D50, measured by means of ultracentrifugal measurement, of 0.2 to 0.4 µm.

7. Compositions according to any of the preceding claims, wherein the compositions are free of polyacrylate rubbers and silicone rubbers and of graft polymers that contain such rubbers as graft base.

8. Compositions according to any of the preceding claims, wherein component B consists of component B.1 to an extent of at least 70% by weight.

9. Compositions according to any of the preceding claims, wherein the polyether-based polymer from component C) is a polyether-amide block copolymer consisting of 30% to 70% by weight, based on the block copolymer, of polyethylene glycol blocks and to an extent of 30% to 70% by weight, based on the block copolymer, of polyamide.

10. Compositions according to any of the preceding claims, wherein the boron-containing salt in component C is at least one alkali metal salt of a boron-centred anionic complex containing bidentate ligands selected from the group consisting of C2-C8 aliphatic or aromatic components having at least two reactive groups selected from -COOH and -OH.

11. Compositions according to Claim 9, wherein the boron-containing salt is potassium bis(oxalato)borate or sodium bis(oxalato)borate.

12. Compositions according to any of the preceding claims, wherein component C consists of
- 69.6% to 98.6% by weight of polyether block polymer consisting to an extent of 30% to 70% by weight, based on the polyether block polymer, of polyethylene glycol blocks and to an extent of 70% to 30% by weight, based on the polyether block polymer, of nylon-12 blocks,
- 1% to 30% by weight of at least one further polymer selected from the group consisting of poly(meth)acrylates and polymethyl(meth)acrylates and
- 0.4% to 4.0% by weight of at least one representative selected from the group consisting of potassium bis(oxalato)borate and sodium bis(oxalato)borate.

13. Compositions according to any of the preceding claims, wherein component D is selected from the group consisting of the substance classes of the dimeric benzotriazoles and the 1,3,5-triazines.

14. Use of compositions according to any of Claims 1 to 13 for production of moulded articles.

15. Moulded articles obtainable from compositions according to any of Claims 1 to 13.

## Revendications

1. Compositions contenant
A) 50 à 90 % en poids d'au moins un polymère choisi dans le groupe constitué par un polycarbonate aromatique, un polyestercarbonate aromatique et un polyester aromatique,
B) 5 à 40 % en poids d'un polymère contenant
B.1 au moins un (co)polymérisat de vinyle modifié par un caoutchouc contenant
B.1.1 80 à 95 % poids, par rapport à B.1, d'au moins un monomère de vinyle et
B.1.2 5 à 20 % poids, par rapport à B.1, d'une ou plusieurs bases de greffe contenant un polybutadiène ayant l'élasticité du caoutchouc, B.1 contenant
des particules de caoutchouc contenant un polybutadiène greffé par les monomères de vinyle B.1.1, qui contiennent des inclusions de (co)polymérisat de vinyle constitué par les monomères de vinyle B.1.1,
et
une matrice de (co)polymérisat de vinyle qui n'est pas liée à ces particules de caoutchouc et qui n' est pas incluse dans des particules de caoutchouc, constituée par les monomères de vinyle B.1.1
et éventuellement B.2 d'autres particules de caoutchouc greffées par des monomères de vinyle composées de
B.2.1 5 à 75 % en poids, par rapport à B.2, d'au moins un monomère de vinyle sur
B.2.2 25 à 95 % poids, par rapport à B.2, d'une ou plusieurs bases de greffe ayant l'élasticité du caoutchouc,
C) 3 à 25 % en poids d'un mélange contenant a) au moins un polymère ou copolymère à base de polyéther choisi dans le groupe constitué par des polymères à bloc polyéther et des polyuréthanes à base de polyéther et b) au moins un sel contenant du bore,
D) 0 à 2 % en poids d'au moins un stabilisant UV choisi dans le groupe constitué par les classes de substance des benzotriazoles et des triazines,
E) 0 à 20 % en poids d'un ou plusieurs additifs supplémentaires,
les compositions contenant les composants A) à E) présentant une teneur en polybutadiène de 1 à 5 % en poids.

2. Compositions selon la revendication 1, le composant A étant un polycarbonate aromatique.

3. Compositions selon l'une quelconque des revendications précédentes, le composant B.1 étant préparé dans un procédé de polymérisation en masse et les particules de caoutchouc contenant des inclusions de (co)polymérisat de vinyle dans le composant B.1 présentant un diamètre moyen de particule D50, mesuré au moyen d'une mesure par ultracentrifugation, de 0,5 à 1,5 µm.

4. Compositions selon l'une quelconque des revendications précédentes, le composant B.1 présentant une teneur en polybutadiène de 8 à 13 % en poids.

5. Compositions selon l'une quelconque des revendications précédentes, la proportion de (co)polymérisat de vinyle qui n'est pas lié à des particules de caoutchouc et qui n'est pas inclus dans des particules de caoutchouc du composant B présentant un poids moléculaire moyen en poids, déterminé au moyen d'une chromatographie à perméation de gel dans du tétrahydrofuranne avec du polystyrène en tant que référence, 140 à 200 kg/mole.

6. Compositions selon l'une quelconque des revendications précédentes, le composant B.2 étant préparé par polymérisation en émulsion par greffage de
B.2.1 25 à 50 % en poids, par rapport au polymérisat de greffe B.2, d'au moins un monomère de vinyle sur
B.2.2 50 à 75 % en poids, par rapport au polymérisat de greffe B.2, d'une ou plusieurs bases de greffe ayant l'élasticité du caoutchouc comportant des températures de transition vitreuse, déterminées par le procédé indiqué dans la description, <-70 °C et comportant des grosseurs moyennes de particule D50, mesurées au moyen d'une mesure par ultracentrifugation, de 0,2 à 0,4 µm.

7. Compositions selon l'une quelconque des revendications précédentes, les compositions étant exemptes de caoutchoucs de polyacrylate et de caoutchoucs de silicone ainsi que de polymères greffés, qui contiennent de tels caoutchoucs en tant que base de greffage.

8. Compositions selon l'une quelconque des revendications précédentes, le composant B étant constitué d'au moins 70 % en poids de composant B.1.

9. Compositions selon l'une quelconque des revendications précédentes, le polymère à base de polyéther du composant C) étant un copolymère à bloc polyéther-amide constitué de 30 à 70 % poids, par rapport au copolymère à bloc, de blocs de polyéthylèneglycol, et de 30 à 70 % poids, par rapport au copolymère à bloc, de polyamide.

10. Compositions selon l'une quelconque des revendications précédentes, le sel contenant du bore dans le composant C étant au moins un sel d'alcali d'un complexe anionique centré sur le bore contenant des ligands bidentés choisis dans le groupe constitué par des composants C₂₋₈-aliphatiques ou aromatiques comportant au moins deux groupes réactifs choisis parmi -COOH et -OH.

11. Compositions selon la revendication 9, le sel contenant du bore étant un bis(oxalato)borate de potassium ou un bis(oxalato)borate de sodium.

12. Compositions selon l'une quelconque des revendications précédentes, le composant C étant constitué de
- 69,6 à 98,6 % en poids d'un polymère à bloc polyéther constitué de 30 à 70 % poids, par rapport au polymère à bloc polyéther, de blocs de polyéthylèneglycol et de 70 % à 30 % en poids, par rapport au polymère à bloc polyéther, de blocs de polyamide-12,
- 1 à 30 % en poids d'au moins un polymère supplémentaire choisi dans le groupe constitué par les poly(méth)acrylates et les polyméthyl(méth)acrylates et
- 0,4 à 4,0 % en poids d'au moins un représentant choisi dans le groupe constitué par le bis(oxalato)borate de potassium et le bis(oxalato)borate de sodium.

13. Compositions selon l'une quelconque des revendications précédentes, le composant D étant choisi dans le groupe constitué par les classes de substance des benzotriazoles dimériques et les 1,3,5-triazines.

14. Utilisation de compositions selon l'une quelconque des revendications 1 à 13 pour la préparation d'articles moulés.

15. Article moulé pouvant être obtenu à partir des compositions selon l'une quelconque des revendications 1 à 13.
